# EUROPEAN PATENT SPECIFICATION

(11) **EP 2 523 395 B1**
(45) Date of publication and mention of the grant of the patent: **15.01.2020**
(21) Application number: 11165424.0
(22) Date of filing: 10.05.2011
(51) Int. Cl.: H04L 12/28, H04N 7/173

(54) **System for and method of setting up a two-way communication session between a customer premises equipment and a server and automatic installation of the customer premises equipment**
System und Verfahren zum Einrichten einer Zweiwege-Kommunikationssitzung zwischen einem Teilnehmer-Endgerät und einem Server sowie automatische Installation des Teilnehmer-Endgeräts
Système et procédé de configuration de session de communication bidirectionnelle entre un équipement sur le site d'un client et un serveur, et installation automatique de l'équipement sur le site d'un client

(43) Date of publication of application: 14.11.2012
(73) Proprietor: Liberty Global Europe Holding B.V., 1119 PE Schiphol-Rijk (NL)
(72) Inventor: Juffermans, Maarten Erik, 2036 PM Haarlem (NL); Perez Diez, Juan Ignacio, 1019 TE Amsterdam (NL)
(74) Representative: Nederlandsch Octrooibureau

(56) References cited:
- US-A1- 2007 209 052
- Cable Television Laboratories, Inc.: "Data-Over-Cable Service Interface Specifications DOCSIS 3.0,MAC and Upper Layer Protocols Interface Specification", , 10 February 2011 (2011-02-10), pages 294-358, XP002660788, Retrieved from the Internet: URL:http://www.cablelabs.com/specification s/CM-SP-MULPIv3.0-I15-110210.pdf [retrieved on 2011-10-07]
- Cable Television Laboratories, Inc.: "DOCSIS Set-top Gateway (DSG) Interface Specification", , 10 February 2011 (2011-02-10), XP002660789, Retrieved from the Internet: URL:http://www.cablelabs.com/specification s/CM-SP-DSG-I17-110210.pdf [retrieved on 2011-10-07]

## Description

### Field of the invention

The invention relates to a method and system of setting up a two-way communication session between a customer premises equipment and a server, and using this communication session afterwards for automatically installing a Customer Premises Equipment (CPE) after the power thereof is switched on for the first time or after it has been moved to another location.

### Background of the invention

Presently, installation of a CPE may include one or more manual processes such as a check of the radio frequency (RF) used in the communication channel, initialization of the CPE, updating relevant software, checking the programs provided to the CPE, etc. The manual process of installing the CPE may introduce unexpected man-made errors and consume considerable efforts and time by users of the CPE to complete the installation process.
A set-top box is an example of a CPE. However, here, the more general term "CPE" will be used.

US 2010/0228838 discloses a system for provisioning a set-top box STB without requiring support from the conditional access controller. The system includes a provisioning data store, located at the server side of the system. Information from the customer order is stored in the provisioning data store. This information includes data about the customer, as well as address and contact information, device information and a list of cable operator services to be enabled for the STB. After the customer order has been received the information is stored and a configuration message is delivered to the STB.

US 2005/0076385 discloses a method for acquiring valid channels in a cable modem. The method makes use of a list of potentially operational channels. The list includes, in order of preference, channels that likely support cable modem services such as the last known good channel, golden channels, etc.

Cable Television Laboratories, Inc.: "Data-Over-Cable Service Interface Specifications DOCSIS 3.0, MAC and Upper Layer Protocols Interface Specification", 10 February 2011, discloses information related to how the cable modem is connected to the service provider during the initialization.

### Summary of the invention

The invention is defined by the appended independent claims and will be more readily understood after reading the following detailed description taken in conjunction with the accompanying drawings.

The object of the invention is to provide a more efficient automatic installation process of CPE in such a manner that the installation time is further reduced. The invention is based on the insight that, in a broadcasting environment a (one-way) broadcast channel can be used to broadcast data that can be used to quickly set up a two-way communication channel that can, consecutively, be used for a quick automatic installation.

In an embodiment, it is a further object of the invention to provide a reinstallation scheme for a CPE to be used when the CPE is moved to another physical location after the CPE has been installed automatically for the first time already in order to save considerable time after such a move.

### Brief description of the drawings

The invention will be explained in detail with reference to some drawings that are only intended to show embodiments of the invention and not to limit the scope. The scope of the invention is defined in the annexed claims and by its technical equivalents.

The drawings show:
Figure 1 shows a simplified schematic diagram of one embodiment of the invention;
Figure 2 shows a schematic diagram of a system setup in one embodiment of the invention;
Figure 3 shows a sequence diagram of an automatic installation process according to one embodiment of the invention;
Figure 4 shows a schematic diagram of the CPE according to one embodiment of invention.

### Detailed description of embodiments

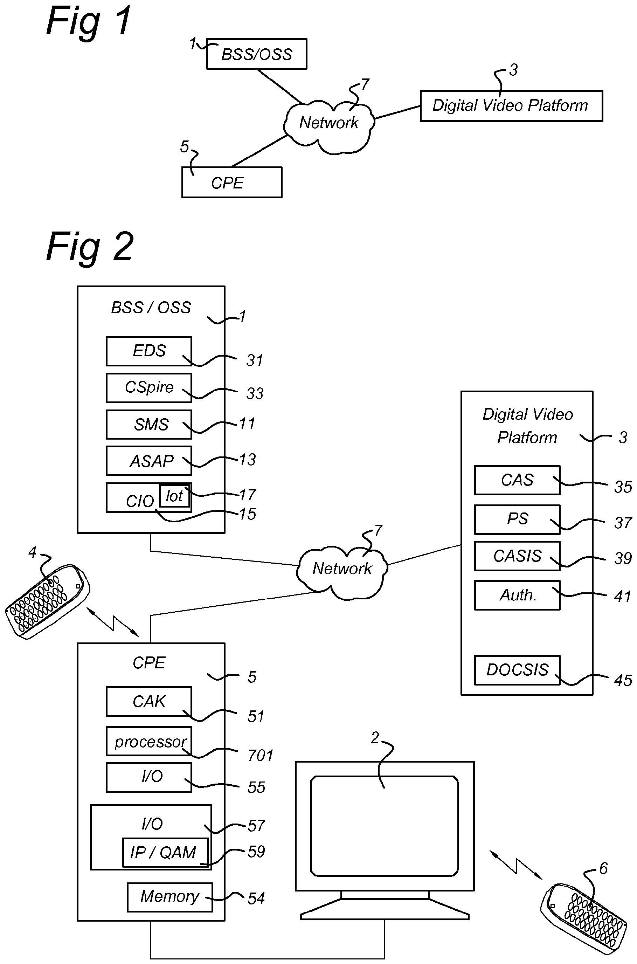

Figure 1 shows a simplified schematic diagram of one embodiment of the invention. A Business Support Systems / Operations Support Systems (BSS/OSS) 1 server is connected to a Digital Video Platform 3 via a network 7. The Digital Video Platform 3 is connected to a Customer Premises Equipment (CPE) 5 via the network 7. Note that the function of the CPE 5 may, in one embodiment, be comparable to the function of a set-top box (STB) used at the premises of an end user to receive, e.g., audio and video data via e.g. a cable or a satellite antenna. The end user may have a subscription with a media provider of such data. The end user may acquire the CPE 5 either by purchasing via an official retail channel of the provider, or via a third party channel, or by leasing the CPE 5 as part of the subscription.

### Summary of functionality.

Now, first, a brief summary of the main functionality of the present invention will be given. This is followed by a detailed specification afterwards.

When an end user subscribes to a service provided by the media provider, the information about his subscription is entered into the BSS/OSS 1. Subsequently, the subscription data is transferred from the BSS/OSS 1 to the Digital Video Platform 3 including the data for identifying the location of the subscriber. This process can be defined as a pre-installation process.

The subscription data stored in the Digital Video Platform 3 is used for configuring the CPE 5. The configuring data can be automatically transferred from the Digital Video Platform 3 to the CPE 5 via a communication channel operated at a certain frequency. This may be a DOCSIS (Data Over Cable Service Interface Specification) channel as defined in the DVB Standard. The configuration data is used by the CPE 5 to configure itself and thus to complete installation. This process can be defined as the automatic installation process.

In order to achieve the abovementioned automatic installation process, such a two-way communication channel is required to be established between the CPE 5 and the Digital Video Platform 3. In order to set up this communication channel, the address of the Digital Video Platform 3 has to be known by the CPE 5, as well as the frequency of the two-way communication channel (the DOCSIS channel) between the CPE 5 and the Digital Video Platform 3.

In order to set up the DOCSIS channel between the Digital Video Platform 3 and the CPE 5, both a list of possible DOCSIS frequencies and the address of the Digital Video Platform 3 are embedded in a data structure periodically transmitted in an inband stream of a one-way transmission channel of the media provider concerned, i.e., the media provider associated with the CPE 5. This one-way transmission channel may be one or more of the well known DVB channels. The CPE 5, once powered on and connected to the network 7, continuously searches for the transmission channel of the media provider by tuning to various possible one-way (DVB) channel frequencies stored in its memory and by checking the presence of a specific media provider identifier in received transmitted data.

By using the available one-way (DVB) channel between the Digital Video Platform 3 and the CPE 5 to transmit these data about the two-way communication (DOCSIS) channel, the CPE 5 will lock to the two-way communication (DOCSIS) channel much faster, and will receive its configuration parameters much faster. In case this mechanism would not be used, the CPE 5 can still search for this two-way communication (DOCSIS) channel, in parallel to tuning to the one-way (DVB) channel, however, such a search process may take much longer, e.g. about 30 minutes.

The CPE 5 preferably stores a first predefined list of predetermined possible frequencies for the inband stream of the one-way transmission (video) channel of the media provider in its memory (that may be well known DVB channels). The inband DVB spectrum can contain for instance 40 transport streams on 40 different frequencies. The order in which the different one-way transmission channels are checked is laid down in this stored first predefined list indicating the possible frequencies for the one-way transmission channel. The position of the predetermined possible frequencies on the first predefined list represents the probability of the desired frequency, e.g. the most likely frequency is listed on top of the list and the least likely frequency is listed at the bottom of the list, respectively.

After the desired frequency of the inband stream of the one-way transmission channel of the media provider has been found by the CPE 5, a message containing both a list of possible two-way DOCSIS channel frequencies and the address of the Digital Video Platform 3 is received by the CPE 5 via the inband stream of the one-way transmission channel.
Hence, the CPE 5 is to be tuned to the correct channel frequency used in the DOCSIS connection so as to connect to the correspondent Digital Video Platform 3, subsequently.

In order to speed up the two-way DOCSIS channel pairing process between the Digital Video Platform 3 and the CPE 5, the CPE 5 uses this second predefined list of predetermined possible two-way DOCSIS channel frequencies. Again the frequencies on this list are ordered, i.e. the most likely frequency is listed on top of the list and the least likely frequency is listed at the bottom of the list, respectively.

As soon as the two-way DOCSIS communication channel between the Digital Video Platform 3 and the CPE 5 is established, household information including information about the address of the subscriber, as is stored in the Digital Video Platform 3 in the pre-installation process, is downloaded from the Digital Video Platform 3 to the CPE 5. Based on this information, the CPE 5 is configured to receive the media channels specific for the indicated location of the subscriber, subsequently. Moreover, the CPE 5 is able to retrieve keys to be used to decrypt content in accordance with the subscription details of the end user. Such content may be any type of content, such as video, audio (music), data, text, etc.

### Detailed explanation of an embodiment.

Figure 2 shows a schematic diagram of one embodiment of the invention.
The CPE 5 may comprise the following functional blocks:
a first I/O interface 55 provided with a video interface for receiving video and related (interactive) services from the media provider;
a second I/O interface 57 for data communication. Note that both the first and the second I/O interface 55, 57 are arranged to provide one or more IP (Internet Protocol) and/or Quadrature Amplitude Modulator (QAM) interfaces 59;
a processor 701 including a video processing unit for processing the video (or other) information received from the media provider via the one-way channel and a data processing unit for data communication and configuring the software and hardware of the CPE 5 and transmitting/receiving data and information between the CPE 5 and the Digital Video Platform 3 via the two-way (DOCSIS) channel;
one or more software programs from a third party, such as a User Interface (UI) for interacting between the end user and the CPE 5, and a Conditional Access Kernel (CAK) component 51 for decrypting the Conditional Access (CA) encrypted content received in broadcasted data. The CAK component 51 is a piece of software integrated in the full software stack on the CPE, handling secrets (keys) and managing the decryption of encrypted content.
a memory unit 54 for storing the first and second predefined frequencies lists. The memory unit 54 will store the first predefined frequency list when the CPE 5 is delivered to the customer. The second predefined frequency list will be stored by the processor 701 in the memory unit 54 once this second list has been received via the one-way inband channel. Note that the memory unit 54 is presented here as one single unit. However, it may be implemented as two separate memory units, one for the Video Processing Unit of processor 701 and one for the data processing unit of processor 701.

It is observed that the functional blocks shown in CPE 5 in figure 2 may be implemented as several separate functions supported by separate digital or software processors. However, one or more of them may also be implemented together by software programs in one or more processors.

Figure 2 also shows a first remote control 4 associated with CPE 5 and arranged to receive instructions from the end user to be sent by the remote control 4 to CPE 5, as is known to persons skilled in the art.

The CPE 5 is connected to at least one television 2. Figure 2 also shows a remote control 6 associated with television 2 and arranged to receive instructions from the end user to be sent to the television 2. CPE 5 can, alternatively, be connected to a home network which is connected to one or more televisions and, possibly, one or more computer arrangements (that may be any type of computer arrangement available on the market, including laptops, pda's, etc.).

The digital video platform 3 may comprise the following functional blocks:
a Conditional Access System (CAS) component 35 for controlling access to encrypted video and audio contents; the CPE 5 can request the decryption keys of the encrypted video and audio contents from this component;
a Personalization Store (PS) component 37 as a repository for households information and customer profiles information and CPE data for personalized services; the household information contains the addresses of the medial provider;
a Conditional Access and Service Information System (CASIS) component 39 for storing network data and linear TV metadata, managing regional channel line-up data and generating data such as DVB (Digital Video Broadcasting) NIT (Network Information Table), SDT (Service Description Table), TOT (Time Offset Table) and EIT (Event Information Table) p/f (present/following) and 24 hours schedule including private descriptors of the media provider;
an Authentication (Auth) component 41 for managing scalability and security of all authenticated requests sent from CPEs 5 to the digital video platform 3;
a DOCSIS cable modem or Cable Modem Termination System (CMTS) 45 acting as an interface for transmitting/receiving data and information between the CPE 5 and the Digital Video Platform 3, and acting as an interface for transmitting/receiving data and information between the Digital Video Platform 3 and the BSS/OSS 1.

It is observed that the functional blocks/components shown in the Digital Video Platform 3 in figure 2 may be implemented as functions of several separate digital or software processors or systems. However, one or more of them may also be implemented together by software programs in one or more processors or systems.

The BSS/OSS 1 may comprise:
a Subscriber Management System (SMS) component 11 as the hub of the BSS/ OSS 1;
an Automatic Service Activation Platform (ASAP) component 13 for communicating with CAS component 35 of the Digital Video Platform 3;
an Enterprise Data Service (EDS) component 31 for providing access to end user data held within a CIO system and for managing detailed data for households (HH) and subscriptions. Note that the CIO is an IT organization and owns all affiliate information systems of the BSS/OSS 1;
a Chello Service Provisioning Internet Reporting Engine (CSpire) component 33 for providing the DOCSIS Cable Modem 45 of the Digital Video Platform 3 with a valid configuration file (customer service entitlements) which renders the end user to be recognized (authenticated) by the DOCSIS system.

In an embodiment of the invention, the OSS/BSS 1 may further comprise:
a CIO component 15 for storing one or more Lot files 17 (CIO refers to the IT organization mentioned above). The Lot File 17 is a descriptive term for a file containing a list of specific CPEs 5 associated with the media provider concerned and with relevant data required by business and provisioning systems. During the pre-installation process, the Lot files are loaded in the CIO component 15 to ensure that each specific CPE 5 associated with the media provider concerned is a known device to the IP network of the correspondent country of the end user. The information in the Lot file 17 contains at least for each CPE 5:
   i) the type of the CPE 5, e.g. Gateway, Interactive or (IP) Client type. Note that the "Gateway" type is the full product with a Hard Disk Drive (HDD) for recordings, home networking support (DLNA), offering telephone service (e.g. VoIP) and internet service (e.g. High Speed Data). The "Interactive" type is a Gateway with less tuners and no HDD. The (IP) "Client" type is a "thin client" device that does not understand the inband stream of one-way broadcast (DVB) communication but relies on the gateway for all incoming video information and data information. It is always used together with a Gateway and not with an Interactive CPE.
   ii) the serial number of the CPE 5, in order to uniquely identify the CPE 5;
   iii) a STB_CA_ID, a textual field containing a unique conditional access identifier for the chipset of the CPE 5.
   iv) Media Access Control (MAC) addresses for all network interfaces including the Cable Modem, eRouter, and Video Processor, etc.

It is observed that the functional blocks shown in BSS/OSS 1 in figure 2 may be implemented as several functions of separate digital or software processors. However, one or more of them may also be implemented together by software programs in one or more processors. It is observed that the functional blocks of the BSS/OSS 1 as shown are only intended to support understanding of the invention. They should not be seen as the only way in which the BSS/OSS 1 can be implemented within the scope of the invention.

Due to a specific retail strategy, a problem may arise in the sense that the Lot files 17 are not delivered to the media provider affiliates. For instance, a CPE 5 may be sold via third parties without ever being delivered to the media provider itself at all. This means that Lot files 17 need to be delivered to the media provider on the release of the CPE 5 from the factory. The Lot files 17 then need to be imported into all country systems as the hardware of the CPE 5 could appear in any of the countries supporting the platform thereof, and in fact can be moved between any of the supported countries. The importation of the Lot file ensures that the STB_CA_ID is stored for any known CPE and when the CPE 5 connects to the country network, it will receive an IP address from a range dedicated to CPE's known to the media service provider concerned. CPE's that are not known to the media service provider concerned may still get an IP address but then derived from a separate, distinct range. This is done so that unknown devices still get an IP address and can be tracked, though these CPE's will not receive access to any other areas of the media provider network. They will not be able to function normally but can still be tracked.

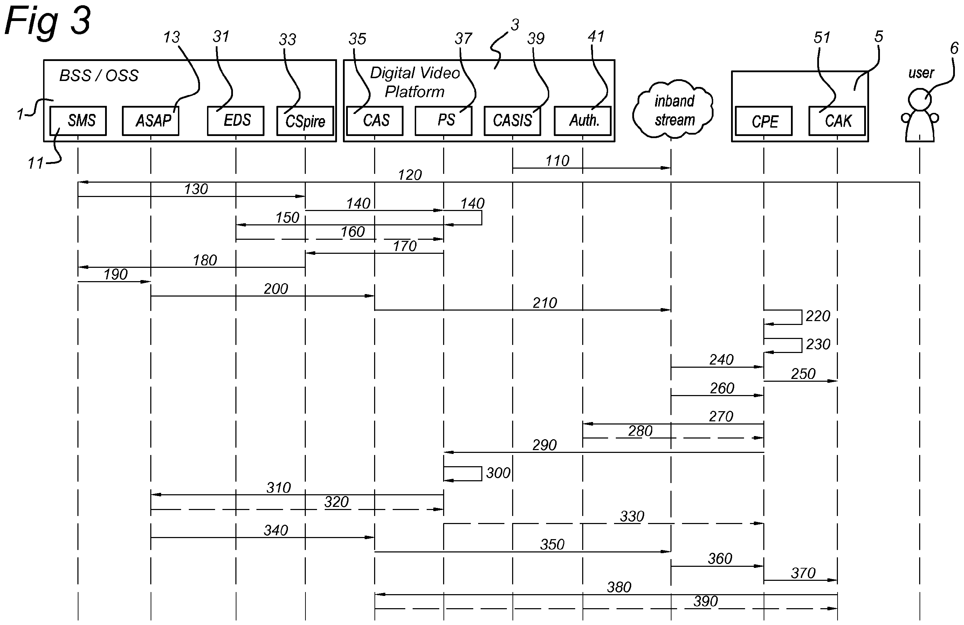

Figure 3 shows a sequence diagram of an automatic installation process according to one embodiment of the invention.

Actions 110 to 210 relate to pre-installation activities and actions 220 to 390 to installation itself. In this pre-installation, customer records within (the SMS component 11 of) the BSS/OSS 1 are created. These actions can start once a CPE 5 has been assigned to a customer. Actual delivery of the CPE 5 to that customer may be later, even after action 210, i.e., the last action of the pre-installation, however, before installation, action 220 and further, can start.

In action 110, Service Information (SI) level configuration parameters are broadcasted by the Digital Video Platform 3 in a media provider specific message in one or more media provider specific communication channels, here also referred to as "inband stream" of the media provider. Note that the SI level configuration parameters here include all information relating to a TV/Radio service such as name, channel number etc. It also includes the general network information such as the Uniform Resource Identifier (URI) mentioned below. CASIS component 39 within Digital Video Platform 3 is handling the service information SI.
Typically, the SI level configuration parameters included in this media provider specific message are a Uniform Resource Identifier (URI) for authentication (Auth) and a Uniform Resource Identifier (URI) of the Personalisation Store (PS), a Country Descriptor, and a DOCSIS frequency list descriptor. In the context of the present invention, the SI level configuration parameters comprise at least an address of the Digital Video Platform 3 (or of its Personalisation Store) and a list of predetermined frequencies that can be used to setup a two-way communication channel between CPE 5 and Digital Video Platform 3 (which may be said DOCSIS frequency list descriptor). Note that if such a DOCSIS frequency list descriptor would not be present in the message a regular DOCSIS frequency search could take still place by CPE 5 followed by a lock to that frequency. Such a regular DOCSIS frequency search can be started anyway in parallel to the search for the one-way (DVB) channel. However, the chance that this search for the DOCSIS frequency channel will be successful before the one-way (DVB) channel being found is low.

The media provider specific message is cycled on a short period, for instance 2 seconds, on each and every inband stream controlled by the media provider. This information is transmitted always and therefore, always available in the inband stream when the Digital Video Platform 3 is operational.

In action 120, after a CPE 5 has been assigned to a customer, an end user or somebody else on behalf of the end-user should provide a specific serial number of the acquired CPE 5 to the SMS component 11 within BSS/OSS 1. This specific serial number is validated by a suitable processor in BSS/OSS 1 against the records stored in the Lot files in BSS/OSS 1 which contain records of all the valid manufactured CPEs 5. The validation will result in obtaining all necessary data regarding the CPE 5 needed to populate the system as needed.

In action 130, the SMS component within BSS/OSS 1 sends relevant CPE data to the CSpire component 33 of the BSS/OSS 1:
The SMS component 11 of the BSS/OSS 1 creates data and links in the CIO component 15 to create household (HH) data object and CPE details. The provided information includes the Location (Country, Region and City) and NIT (Network Information Table) for the location where installation will take place. The CPE details may include the STB_CA_ID for identifying a specific CPE 5.
Note that the CIO component 15 must ensure at this point that the CPE 5 is registered to receive a valid modem configuration for a known device. It is possible that the CPE 5 will have any number of modem configurations depending upon whether it comprises, apart from the audio and video services, one or more Telephony services, and one or more High Speed Data (HSD) services. Note that the speed of the HSD service may vary.

In action 140, the CSpire component 33 (or any other suitable component within BSS/OSS 1) notifies the household (HH) changes to the PS component 37 of the Digital Video Platform 3. The PS component 37 creates a new HH data object with a default profile.

In action 150, the PS component 37 requests the HH information such as the end user address details from the EDS component 31.

In action 160, the PS component 37 receives the HH information such as the end user address details from the EDS component 31.

In action 170, the PS component 37 notifies the CSpire component 33 that the HH information has been updated.

In action 180, the CSpire component 33 in the BSS/OSS 1 triggers the SMS component 11 to initiate a Conditional Access (CA) system, and to send pairing information regarding the CPE 5 and Digital Video Platform 3 concerned and subscription data of the end user from SMS component 11 to the ASAP component 13 in BSS/OSS 1. Note that the CA initialization will be the adding of end user product entitlements (EMMs = Entitlement Management Message) to the CA system, through the CIO/ASAP components. These entitlements are stored first in PS component 37 as a "for your information" to be used in CPE UI (user interface) screens for instance (list of customer products), but the real conditional access and being able to decrypt customer products is arranged through communicating between ASAP component 13 and CAS component 35.

In action 190, SMS component 11 sends such pairing information and such subscription information to ASAP component 13.

In action 200, such pairing information and such subscription information are sent from the ASAP component 13 of the BSS/OSS 1 to the CAS component 35 of the Digital Video Platform 3. Pairing between the CPE 5 and Digital Video Platform 3 takes place in the CAS component 35 with an electronic link (ELK).

In action 210, the CAS component 35 sends out Entitlement Management Messages (EMMs) addressed to the specific CPE 5. Such EMMs contain the specific IP address of the CAS component 35 in Digital Video Platform 3. The EMM includes at least data to be used by said CPE 5 to obtain one or more predetermined keys from said CAS component 35, said keys allowing to decrypt media content in accordance with subscription details.
Such EMMs are broadcasted via the inband stream (or via a plurality of inband streams) and allow later retrieval of suitable keys by the CPE 5 when the CPE 5 concerned has been switched on and has completed its installation process, as will be explained later. The EMMs are broadcasted by CAS component 35, for instance, via two carousel stages, i.e. a Fast Profile and a Slow Profile. The Fast Profile runs for 5 minutes from the start and transmits the EMMs with a period of 10 seconds. The Slow Profile runs for 30 days from the start and transmits the EMMs with a period of 30 minutes. Of course, these time durations are examples only. More than two such transmission profiles may be used, every next profile lasting a longer time than the earlier one and having a longer intermediate period of transmission of the EMMs. The reason to do so is that one may expect the CPE 5 concerned to start to initiate as soon as possible after the CPE 5 has been acquired by an end user. If so, initiation must be completed as soon as possible. However, if the acquired CPE 5 is not switched on soon, it is getting more and more uncertain when it will do so and the time interval between transmissions of EMMs is made longer to decrease load on the system.
It is observed that action 210, i.e. broadcasting of EMMs at this stage is optional. Action 210 is the last pre-installation action. Installation starts in action 220.

In action 220, the end user has to ensure some preliminary actions are done, like connecting the acquired CPE 5 to the power supply, connecting CPE 5 to network 7 (either by cable or wirelessly), connecting CPE 5 to television 2, e.g. by means of a SCART or High-Definition Multimedia Interface (HDMI), switching on CPE 5 and activating remote control 4 associated with CPE 5 by putting the batteries into remote control 4.

After the CPE 5 has been switched on, the operating system as running on the CPE 5 boots. As part of this booting, the CPE 5:
- Establishes a communication link with the network 7,
- Initiates a pairing process with the remote control 4, possibly using suitable keys, in order to receive instructions from the end user operating the remote control 4,
- Establishes a communication link with television 2, and, optionally, shows an introduction screen on television 2,
- Starts initiation of acquisition of the inband stream as available on network 7, which it knows to be available at one of a plurality of (e.g. 26) transmission frequencies.

In action 230, the CPE 5 locates and validates the inband stream of the media provider as broadcasted on network 7 by the Digital Video Platform 3.
Note that the detection of the inband stream of the media provider is performed by searching for a specific provider identifier of the media provider in all streams that can be received by CPE 5. A plurality of possible predetermined frequencies of the inband stream of the media provider are included in a predefined list stored in the CPE 5. The position of the frequencies on the list represents the probability of the frequency, e.g. the most likely frequency is listed on top of the list and the least likely frequency is listed at the bottom of the list, respectively. The CPE 5 may search for the inband stream by tuning to the predetermined frequencies of the inband stream included in the predefined list starting at the top of the list and then going down. If the inband stream has been found, the CPE 5 checks for the presence of a specific provider identifier in the broadcasted data (which may be present in a so-called bouquet association table (BAT) file). Note that, on average, the CPE 5 may find the frequency of the inband stream within the first 10 frequencies included in the predefined list stored in the CPE 5. If an inband stream of one of these frequencies is found but the specific provider identifier is not detected, the CPE 5 continues its search. Note that the predefined frequency list may be stored in a memory unit of the CPE 5.

In action 240, after having found both the frequency of the inband stream and the specific provider identifier in the transmitted data, the CPE 5 retrieves the Entitlement Management Messages (EMMs) from the inband stream.

Note that if the CPE 5 was powered on before for installation during the first Fast Profile cycle then this data will certainly be received. If the CPE 5 is powered on after that but during the Slow Profile cycle then there may be a smaller likelihood (estimated 1 in 6 probability) that the CPE 5 will receive inband EMMs before being synchronized with the PS component 37 of the Digital Video Platform 3.
In any case, as soon as the Digital Video Platform 3 is synchronized with CPE 5, the Digital Video Platform 3 will trigger its Conditional Access System (CAS) 35 to cycle the EMMs at high rate (again), i.e., CAS 35 will then periodically transmit the EMMs again at a high rate, e.g. the same rate as in the Fast Profile cycle, such that the EMMs can be received by CPE 5 as soon as possible.

In action 250, after CPE 5 has received the inband EMMs they are passed to the Conditional Access Kernel (CAK) 51. The CPE 5 can then be conceived to be "paired" to its virtual smartcard and ready to retrieve keys to be used to decrypt media content.

In action 260, CPE 5 is still tuned to the inband stream of one-way communication channel and retrieves the Service Information (SI) level configuration parameters such as the URI of AUTH component 41 and the URI of PS component 37 (or in more general terms, the address of Digital Video Platform 3), the Country descriptor, as well as the DOCSIS frequency list descriptor. The configuration information is stored in a memory unit such as NVRAM/FLASH.

Note that the CPE 5 configures the pre-installed User Interface (UI) element selection based on the Country Descriptor.

Note that the DOCSIS frequency list Descriptor may also be stored in the memory unit. The DOCSIS frequency list Descriptor comprises a plurality of predetermined DOCSIS frequencies of the Digital Video Platform 3, or, in more general terms, a plurality of predetermined frequencies of possible two-way channels that can be used between CPE 5 and Digital Video Platform 3.

After the CPE 5 receives the SI level configuration parameter, the CPE 5 sends the extracted DOCSIS frequency list to the data processing unit of the processor 701. Unless the two-way DOCSIS communication channel has already been established (in which case the frequency list is ignored), the data processing unit of the processor 701 will use the short list of frequencies to attempt the establishment of the two-way DOCSIS communication channel.

A plurality of possible DOCSIS frequencies of the Digital Video Platform 3 are included in the DOCSIS frequency list. The position of the frequencies on the list represents the probability of the frequency, e.g. the most likely frequency is listed on top of the list and the least likely frequency is listed at the bottom of the list, respectively. The CPE 5 may establish the two-way DOCSIS communication channel by tuning to the predetermined DOCSIS frequencies included in the DOCSIS frequency list starting at the top of the list and then going down.

If the DOCSIS frequency has been found, the data processing unit of the processor 701 acquires full DOCSIS lock, i.e. the data processing unit of the processor 701 locks the specific frequency and establishes the two-way DOCSIS communication channel based on this specific frequency. Note that the time interval of the DOCSIS searching process is between a few seconds and 30 minutes depending on whether full scan process is undertaken by the CPE 5, or never in cases of a network issue, i.e., for instance, in case of a disfunctioning CMTS, DOCSIS will not work (CMTS refers to a Cable Modem Termination System in the headend). Note that during the locking specific frequency process, the screen of the television connected to the CPE 5 is blocked, i.e. the information displayed on the screen is unchanged. However, if establishing the DOCSIS lock has taken more than 5 minutes, a warning information is shown on a screen on the televison indicating that the end user should not unplug the CPE 5.

If the DOCSIS channel has been established, the CPE 5 checks for DOCSIS channel connection via an Inter Processor Communication (IPC).The video processing unit of the processor 701 communicates with the data processing unit of the processor 701 via the IPC to check whether the two-way DOCSIS communication channel has been locked.
After the checking, the CPE 5 confirms the DOCSIS channel connection. The screen of the television connected to the CPE 5 stops blocking.

Note that in some circumstances, some actions of action 220, 230, 240 and 260 can be executed in parallel or simultaneously, e.g. action 250 and action 260 can be executed simultaneously. The key issue is that action 260 occurs before the DOCSIS lock has been achieved so as to accelerate the booting process of the CPE 5. If action 260 occurs after the DOCSIS lock, the process would proceed as in the prior art without any speed benefit.

In action 270, CPE 5 is authenticated by AUTH component 41 of the Digital Video Platform 3 when CPE 5 initiates a connection request to the Digital Video Platform 3 over the two-way (DOCSIS) channel. Such authentication may be performed by any means known in the art.

In action 280, CPE 5 receives an authentication message in return from the Digital Video Platform 3, indicating that authentication has been successful.

In action 290, CPE 5 reads household (HH) Data from PS Data Store component 37 of Digital Video Platform 3 when the authentication response has been received from AUTH component 41 of the Digital Video Platform 3. This effectively registers CPE 5 in Digital Video Platform 3 for the first time.

In action 300, the PS Data Store component 37 retrieves household (HH) Data mapped to a specific CPE 5 according to the CPE identifier (ID). The CPE ID is like a unique hardware identifier of the CPE 5.

In action 310, the Digital Video Platform 3 sends a refreshed CPE data message from the Digital Video Platform 3 to BSS/OSS 1, as is confirmed by BSS/OSS 1 in action 320. This action may guarantee the BSS/OSS 1 triggers the CAS component 35 to send out EMMs in high profile again.

In action 330, the Digital Video Platform 3 transmits the household data to CPE 5 when the Digital Video Platform 3 has received confirmation of reception of the refreshed message from BSS/OSS 1. Such household information may contain location, network ID, country, and entitlements as defined in the subscription of the end user, etc.
The Digital Video Platform 3 also sends household profile information to CPE 5. The household profile information may e.g. contain a default nickname, UI language, maximum number of automated recordings (ARR), default start channel, and various other end user options.
Note that if this is not a first installation but an installation after a factory reset, the Digital Video Platform 3 will still have household information and one or more profiles. If more profiles exist, the CPE 5 will receive all profiles and install them. With regard to user settings of the CPE 5, they will be the same as before the factory reset. Based on the information received from the Digital Video Platform 3, CPE 5 configures localization parameters: country, region, city, and Network ID (NID). Here the parameter NID is used to select the right set of frequencies and local channels for a specific city where the end user is located. For instance, the end user A in a south part of a country C may get different channels than another end user B in a north part of country C. Both user A and user B may be located on transport streams on a different frequency as well. Note that the above mentioned parameters describe the geographical and network topological location of the end user which automates the installation process.
The CPE 5 creates a local household profile using all the household profile data retrieved from the Digital Video Platform 3.
Further, the CPE 5 retrieves the Network Information Table (NIT) and checks if a new software (SW) version for its own functionality is available via network 7. If a different SW version is available, the CPE 5 programs the software update location (DVB triplet and PID) in flash memory where the boot loader can retrieve it. Then CPE 5 is rebooted.

In action 340, the BSS/OSS 1 sends a pairing message to the CAS component 35 of the Digital Video Platform 3, indicating that the CPE 5 with a hardware identifier A, if possible, is coupled to a virtual smartcard number B. Therefore, the CAS component 35 can keep track of the EMMs that are coupled to the virtual smartcard B. The Digital Video Platform 3 adds subscription information with the location of the subscriber into the CAS component 35.

In action 350, the Digital Video Platform 3 transmits inband EMMs from CAS component 35 to the inband stream of the one-way communication channel, preferably via a Fast Profile format, i.e. running for 5 minutes with a period of 10 seconds between successive times such EMMs are transmitted.
It is observed that action 250 is merely passing a received EMM from middleware SW to CAK SW, which are both running on the CPE 5. Action 210 is cycling the EMM in a fast profile first and then in a slow profile. This fast/slow scheme may be exactly the same as the fast/slow in action 350. The reason this action is repeated, is because in action 250 the CPE 5 is just provisioned in the headend, for instance only 10 minutes after the CPE 5 was associated with the customer. In case the CPE was already in the customer premises the CPE 5 would be paired immediately. However, if the customer would have ordered the CPE 5 from the media service provider itself (e.g., lease or purchase), the CPE 5 would only arrive up to, e.g., three days later and the slow profile would have kicked in long ago. Refreshing the whole chain and using fast profile automatically increases the odds of getting an EMM quickly during installation again. Otherwise it could for instance take 30 minutes to see video, if the slow profile is set to 30 minutes. This is an important part of the installation performance. In other words: basically action 350 is not needed if action 250 succeeded, but action 250 may only have an estimated 1 in 6 chance of occurring.

In action 360, CPE 5 receives the EMMs from the inband stream.

In action 370, CPE 5 processes the received EMMs and delivers them to CAK component 51.

In action 380, CPE 5 requests decryption keys from CAS component 35 of Digital Video Platform 3. The decryption keys can be used to decrypt media content as received by CPE 5 after installation and as requested by the end user via remote control 4.

In action 390, CPE 5 receives decryption keys from CAS component 35 of the Digital Video Platform 3.

After the installation, CPE 5 may check the VoD (video on demand) catalogue for a welcome video (which may be placed in a special welcome category in the catalogue). This video will be played for the end user. If power is cut before the video is finished, the CPE will boot to default standby mode since installation is considered finished.

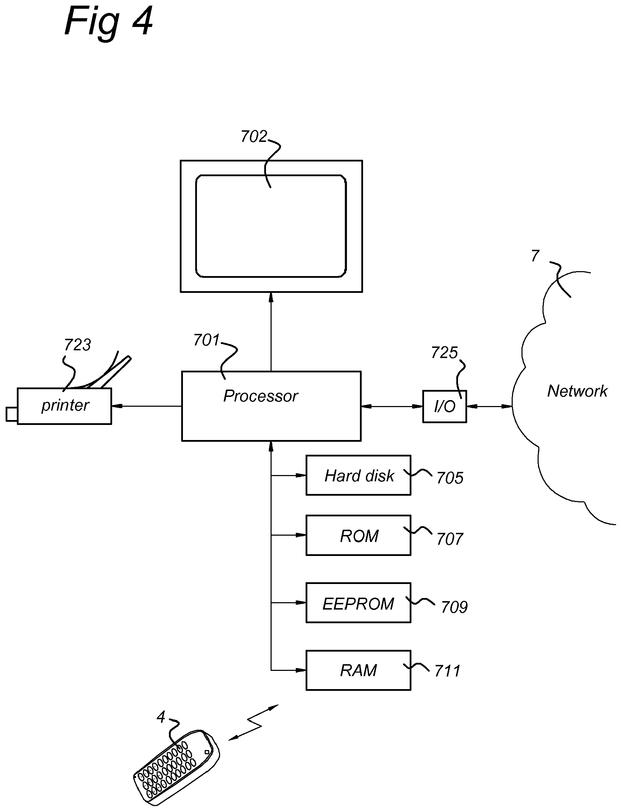

In figure 4, a detailed overview is given of a CPE 5 that can be used to carry out the method according to the invention. The arrangement comprises a Processor 701 for carrying out arithmetic operations.

The processor 701 is connected to a plurality of memory components, including a hard disk 705, Read Only Memory (ROM) 707, Electrically Erasable Programmable Read Only Memory (EEPROM) 709, and Random Access Memory (RAM) 711. Not all of these memory types need necessarily be provided.
The processor 701 is also connected to units for inputting instructions, data etc. by a user, like a remote controller 4. Other input units, such as a touch screen, a track ball and/or a voice converter, known to persons skilled in the art may be provided too.

The data carrier may be provided with a computer program product comprising instructions and data arranged to be read by the processor 701 and, after being read, allowing the processor 701 to perform a method in accordance with the invention. Such a computer program product may then be loaded in one of the memory components 705, 707, 709, 711. However, such computer program product may, alternatively, be downloaded via the network 7.

The processor 701 may be connected to a display 702, for instance, a monitor or LCD (Liquid Crystal Display) screen, a plasma display panel, or any other type of display known to persons skilled in the art.

The processor 701 is connected to the network 7, for instance, the Public Switched Telephone Network (PSTN), a Local Area Network (LAN), a Wide Area Network (WAN), the Internet, etc. by means of an I/O unit 725. The processor 701 is arranged to communicate with other communication arrangements through the network 7. Note that the I/O unit 725 performs at least two functions, i.e., an I/O function to the DOCSIS channel (which is for data) and to the one-way inband DVB channel (which is for video). It may be implemented as two distinct I/O devices.

The processor 701 may be implemented as stand alone system, or as a plurality of parallel operating processors each arranged to carry out subtasks of a larger computer program, or as one or more main processors with several sub-processors.

Note that all the components (51, 53, 55, 57, 59, 54) of the CPE 5 described in figure 2 can be implemented or executed in the processor 701.

Note that the BSS/OSS 1 and the Digital Video Platform 3 may have the same or a similar structure as the one described in figure 4 to perform them with the functionality as explained above, which is well known for the people skilled in the art.

### Reboot

In the event of a partial provisioning situation, or to allow clean-up of the CPE 5 after deprovisioning, the CPE 5 must be able to install in a different location, possibly provisioned to an entirely different end user. This can be difficult if the installation tries to resume where it left of.

In one embodiment, The solution is to always restart the installation in case of a failure. This failure state is defined as a state where an error is shown on the screen of television 2 (i.e., for instance, "no inband stream found", "no locale found", etc). If from such a state the CPE 5 is given a reboot, the installation will fully restart.
An other embodiment is where the CPE 5 reboots when no error screen was shown (an accidental power cut for instance). In that case the CPE 5 will attempt to skip as many actions as possible and resume close to the point where the reboot occurred, to save time.

### Move of CPE 5

In case of moving the CPE 5 from one location to an other, the CPE 5 should be installed once again. In fact, substantially the same solution can be used as the one described already can be used for such a re-installation after a move.

If, after a successful installation in a first location, the CPE is taken to a different location and the end-user gives the CPE 5 a "factory reset", or "return to factory settings", all memories are cleared and installation starts a new with action 220 in figure 3.

If that different location is incompatible from the customer address that was provisioned in the headend for the first installation (for instance a wildly different channel line-up), the re-installation will fail (no channels found).

In case of a normal scheduled move, the BSS/OSS 1 needs to be notified of the address change by the customer. Once the Location and NIT has been received by the BSS/OSS 1, the address will be propagated to all systems (steps 130-160) but this will not affect the CPE yet. Once the customer takes the CPE to the new address, and performs a factory reset on CPE 5, actions 220 and further are executed and follows normal install again. The channel line-up will be based on the updated locale (country, region, city and network ID) and will be correct. The factory reset is a crucial part of this move process.

It is to be understood that all the automatic installation procedures may also allow a manual installation approach that diverges from the automatic flow and allow the installer to enter minimum network configuration to be applied.

## Claims

1. Method of setting up a two-way communication session between a customer premises equipment, CPE, (5) and a first server (3), comprising:
a) By said first server (3), periodically broadcasting at a first rate via at least one one-way DVB broadcast channel on at least one first frequency a first set of data including at least an address of said first server (3) and a list of possible second frequencies to be used to set up a two-way DOCSIS communication channel between said customer premises equipment (5) and said server (3) for said two-way communication session,
b) Upon switching on said customer premises equipment (5), by said customer premises equipment tuning to said at least one one-way DVB broadcast channel on said at least one first frequency by searching for a specific media provider identifier in all streams that can be received by the CPE, checking the presence of specific media provider identifier, and after finding said at least one first frequency of said at least one one-way DVB broadcast channel, receiving from said at least one one-way DVB channel said first set of data as broadcasted on said at least one first frequency,
c) By said customer premises equipment, using said list of possible second frequencies to establish said two-way DOCSIS communication session between said customer premises equipment and said server at one of said second frequencies.

2. Method of automatically installing a customer premises equipment (5), comprising:
• Storing configuration data for said customer premises equipment (5) in a first server (3),
• Using the method of claim 1 to set up a two-way DOCSIS communication session between said customer premises equipment (5) and said first server (3)
• By said customer premises equipment (5), during said communication session downloading said configuration data from said first server (3) and processing said configuration data to install said customer premises equipment (5).

3. Method in accordance with claim 2, wherein said first set of data includes data as to how to authenticate said customer premises equipment with said first server (3), said data as to how to authenticate said customer premises equipment (5) with said first server (3) comprises an address of an authentication server (Auth) within said first server, said method comprising using by said customer premises equipment (5) in said communication session said address of said authentication server to perform an authentication action.

4. Method in accordance with claim 1, 2 or 3, wherein said list of possible second frequencies comprises Data Over Cable Service Interface Specification (DOCSIS) frequencies.

5. Method according to any of the preceding claims, comprising:
• By said first server (3), periodically broadcasting via said at least one one-way channel at a second rate an entitlement management message (EMM) and addressed to said customer premises equipment (5), said entitlement management message including at least data to be used by said customer premises equipment (5) to obtain one or more predetermined keys from said first server, said keys allowing to decrypt media content in accordance with subscription details.

6. Method in accordance with claim 5, wherein said entitlement management message comprises an address of a conditional access server (CAS) within said first server where said one or more keys can be obtained by said customer premises equipment.

7. Method according to claim 6, wherein said method comprises using said address of said conditional access server (CAS) by the customer premises equipment (5) to acquire said one or more keys.

8. Method according to any of the claims 5-7, wherein said second rate at which said first server periodically transmits said entitlement management message (EMM) addressed to said customer premises equipment (5) is equal to a fast profile during a first period of time followed by a slow profile during a second period of time.

9. Method according to any of the preceding claims, wherein said customer premises equipment stores a list of possible first frequencies for said at least one one-way DVB broadcast channel, said searching by said customer premises equipment for said first set of data as broadcasted on said first frequency includes trying frequencies in said list of possible first frequencies in order of descending probability.

10. Method according to any of the preceding claims, wherein said using said list of possible second frequencies to establish said two-way DOCSIS communication session between said customer premises equipment and said server includes trying frequencies in said list of possible second frequencies in order of descending probability.

11. Method according to claim 2, wherein said method comprises storing a list of serial numbers of a plurality of customer premises equipments, and a location and a network information table identifier for each customer premises equipment in a second server (1), said location and network information table identifier relating to a location where installation of an associated customer premises equipment will be performed, and transmitting said network information table identifier to said first server (3).

12. Method in accordance with claim 11, wherein the method includes by said customer premises equipment using said two-way communication session to register with said first server (3), and obtaining household data from said first server (3), including at least said location and network information table identifier.

13. System comprising at least a customer premises equipment and a first server to perform the method according to any of claims 1-12.

14. System according to claim 13, comprising a second server and arranged to perform the method according to any of the claims 11 or 12.

15. Method of setting up a two-way communication session in a customer premises equipment (5), comprising:
a. Upon switching on said customer premises equipment (5), by said customer premises equipment tuning to a one-way DVB broadcast channel on a first frequency by searching for a specific media provider identifier in all streams that can be received by the CPE, checking the presence of specific media provider identifier, and after finding said at least one first frequency of said at least one one-way DVB broadcast channel, and receiving a first set of data as broadcasted on said first frequency, the first set of data including at least an address of a server (3) and a list of possible second frequencies to be used to set up a two-way DOCSIS communication session between said customer premises equipment (5) and said server (3),
b. By said customer premises equipment, using said list of possible second frequencies to establish said two-way DOCSIS communication session between said customer premises equipment and said server at one of said second frequencies.

16. Method according to claim 15, comprising, by said customer premises equipment (5), during said two-way DOCSIS communication session downloading configuration data from said server (3) and processing said configuration data to install said customer premises equipment (5).

17. Method according to claim 14 or 15, by said customer premises equipment (5) receiving via said at least one one-way broadcast channel at a second rate an entitlement management message (EMM) addressed to said customer premises equipment (5), and using said entitlement management message (EMM) to obtain one or more predetermined keys from said server, said keys allowing to decrypt media content in accordance with subscription details.

18. A customer premises equipment arranged to perform the method of claim 15, 16 or 17.

19. Method of setting up a two-way communication session in a server (3), comprising:
a. Periodically broadcasting at a first rate via at least one one-way DVB broadcast channel on at least one first frequency a first set of data including at least an address of said server (3) and a list of possible second frequencies to be used to set up a two-way DOCSIS communication session between a customer premises equipment (5) and said server (3),
b. Setting up a two-way DOCSIS communication session with the customer premises equipment at one of said second frequencies.

20. Method according to claim 19, comprising:
• Storing configuration data for said customer premises equipment (5) in a first server (3),
• during said two-way communication session allowing said customer premises equipment (5) to download said configuration data from said server (3).

21. Method according to claim 19 or 20, comprising periodically broadcasting via said at least one one-way channel at a second rate an entitlement management message (EMM) and addressed to said customer premises equipment (5), said entitlement management message including at least data to be used by said customer premises equipment (5) to obtain one or more predetermined keys from said first server, said keys allowing to decrypt media content in accordance with subscription details.

22. A server arranged to perform the method as claimed in claims 19, 20 or 21.

## Patentansprüche

1. Verfahren zum Einrichten einer Zweiwege-Kommunikationssitzung zwischen einem Teilnehmer-Endgerät, CPE, (5) und einem ersten Server (3), bei dem:
a) durch den ersten Server (3) über wenigstens einen Einweg-DVB-Rundfunkkanal bei wenigstens einer ersten Frequenz ein erster Satz von Daten einschließlich wenigstens einer Adresse des ersten Servers (3) und einer Liste von möglichen zweiten Frequenzen, die zum Einrichten eines Zweiwege-DOCSIS-Kommunikationskanals zwischen dem Teilnehmer-Endgerät (5) und dem Server (3) für die Zweiwege-Kommunikationssitzung zu verwenden sind, mit einer ersten Häufigkeit periodisch ausgestrahlt wird,
b) auf das Einschalten des Teilnehmer-Endgerätes (5) hin durch das Teilnehmer-Endgerät auf den wenigstens einen Einweg-DVB-Rundfunkkanal bei der wenigstens einen ersten Frequenz abgestimmt wird, indem in allen Datenströmen, die von dem CPE empfangen werden können, nach einem spezifischen Medienanbieteridentifizierer gesucht wird, indem das Vorhandensein des spezifischen Medienanbieteridentifizierers geprüft wird und indem, nach Auffinden der wenigstens einen ersten Frequenz des wenigstens einen Einweg-DVB-Rundfunckanals, auf dem wenigstens einen Einweg-DVB-Kanal der erste Satz von Daten, wie er bei der wenigstens einen ersten Frequenz ausgesendet wird, empfangen wird,
c) durch das Teilnehmer-Endgerät die Liste von möglichen zweiten Frequenzen verwendet wird, um die Zweiwege-DOCSIS-Kommunikationssitzung zwischen dem Teilnehmer-Endgerät und dem Server bei einer der zweiten Frequenzen zu etablieren.

2. Verfahren zum automatischen Installieren eines Teilnehmer-Endgeräts (5), bei dem
• Konfigurationsdaten für das Teilnehmer-Endgerät (5) in einem ersten Server (3) gespeichert werden,
• das Verfahren nach Anspruch 1 angewendet wird, um die Zweiwege-DOCSIS-Kommunikationssitzung zwischen dem Teilnehmer-Endgerät (5) und dem ersten Server (3) aufzubauen,
• während der Kommunikationssitzung von dem Teilnehmer-Endgerät (5) die Konfigurationsdaten von dem ersten Server (3) heruntergeladen werden und die Konfigurationsdaten prozessiert werden, um das Teilnehmer-Endgerät (5) zu installieren.

3. Verfahren nach Anspruch 2, wobei der erste Satz von Daten Daten enthält, wie das Teilnehmer-Endgerät mit dem ersten Server (3) zu authentifizieren ist, wobei die Daten, wie das Teilnehmer-Endgerät (5) mit dem ersten Server (3) zu authentifizieren ist, eine Adresse eines Authentifizierungs-Servers (Auth) innerhalb des ersten Servers beinhalten, wobei das Verfahren beinhaltet, die Adresse des Authentifizierungs-Servers durch das Teilnehmer-Endgerät (5) in der Kommunikationssitzung zu verwenden, um eine Authentifizierungsaktion durchzuführen.

4. Verfahren nach Anspruch 1, 2 oder 3, wobei die Liste von möglichen zweiten Frequenzen Data-Over-Cable-Service-Interface-Specification-(DOCSIS)-Frequenzen umfasst.

5. Verfahren nach einem der vorhergehenden Ansprüche, bei dem:
• von dem ersten Server (3) über den wenigstens einen Einweg-Kanal eine Berechtigungsmanagementnachricht (EMM) periodisch mit einer zweiten Häufigkeit ausgesendet und an das Teilnehmer-Endgerät (5) gerichtet wird, wobei die Berechtigungsmanagementnachricht wenigstens Daten umfasst, die von dem Teilnehmer-Endgerät (5) zu verwenden sind, um einen oder mehrere vorgegebene Schlüssel von dem ersten Server zu erhalten, wobei die Schlüssel es nach Maßgabe von Abonnementsdetails es ermöglichen, Medieninhalte zu entschlüsseln.

6. Verfahren nach Anspruch 5, wobei die Berechtigungsmanagementnachricht eine Adresse eines Zugangskontroll-Servers (CAS) innerhalb des ersten Servers enthält, wo von dem Teilnehmer-Endgerät der eine oder mehrere Schlüssel erhalten werden kann.

7. Verfahren nach Anspruch 6, wobei das Verfahren beinhaltet, die Adresse des Zugangskontroll-Servers (CAS) durch das Teilnehmer-Endgerät (5) zu verwenden, um den einen oder die mehreren Schlüssel zu erlangen.

8. Verfahren nach einem der Ansprüche 5 - 7, wobei die zweite Häufigkeit, mit der der erste Server periodisch die an das Teilnehmer-Endgerät (5) gerichtete Berechtigungsmanagementnachricht (EMM) aussendet, gleich einem schnellen Profil während einer ersten Zeitperiode, gefolgt von einem langsamen Profil während einer zweiten Zeitperiode ist.

9. Verfahren nach einem der vorhergehenden Ansprüche, wobei das Teilnehmer-Endgerät eine Liste von möglichen ersten Frequenzen für den wenigstens einen Einweg-DVB-Rundfunckanal speichert, wobei das Suchen des ersten Satzes von Daten, die bei der ersten Frequenz ausgestrahlt werden, durch das Teilnehmer-Endgerät beinhaltet, Frequenzen in der Liste von möglichen ersten Frequenzen in der Reihenfolge abnehmender Wahrscheinlichkeit auszuprobieren.

10. Verfahren nach einem der vorhergehenden Ansprüche, wobei das Verwenden der Liste von möglichen zweiten Frequenzen zum Aufbau der Zweiwege-DOCSIS-Kommunikationssitzung zwischen dem Teilnehmer-Endgerät und dem Server beinhaltet, Frequenzen in der Liste von möglichen zweiten Frequenzen in der Reihenfolge abnehmender Wahrscheinlichkeit auszuprobieren.

11. Verfahren nach Anspruch 2, wobei das Verfahren beinhaltet, eine Liste von Seriennummern einer Vielzahl von Teilnehmer-Endgeräten und einen Orts- und einen Netzwerkinformations-Tabellenidentifizierer für jedes Teilnehmer-Endgerät in einem zweiten Server (1) zu speichern, wobei der Orts- und Netzwerkinformations-Tabellenidentifizierer sich auf einen Ort bezieht, wo die Installation eines zugehörigen Teilnehmer-Endgerätes durchgeführt werden wird, und den Netzwerkinformation-Tabellenidentifizierer zu dem ersten Server (3) zu senden.

12. Verfahren nach Anspruch 11, wobei bei dem Verfahren durch das Teilnehmer-Endgerät die Zweiwege-Kommunikationssitzung dazu verwendet wird, um sich bei dem ersten Sever (3) zu registrieren und von dem ersten Server (3) Haushaltsdaten, einschließlich wenigstens der Orts- und Netzwerkinformation-Tabellenidentifizierer, zu erhalten.

13. System mit wenigstens einem Teilnehmer-Endgerät und einem ersten Server, um das Verfahren nach einem der Ansprüche 1 - 12 durchzuführen.

14. System nach Anspruch 13, mit einem zweiten Server und dazu eingerichtet, um das Verfahren nach einem der Ansprüche 11 oder 12 durchzuführen.

15. Verfahren zum Aufbau einer Zweiwege-Kommunikationssitzung in einem Teilnehmer-Endgerät (5), bei dem
a. auf das Einschalten des Teilnehmer-Endgerätes (5) hin durch das Teilnehmer-Endgerät auf einen Einweg-DVB-Rundfunkkanal auf eine erste Frequenz abgestimmt wird, indem in allen Datenströmen, die von dem CPE empfangen werden können, nach einem spezifischen Medienanbieteridentifizierer gesucht wird, das Vorhandensein des spezifischen Medienanbieteridentifizierers geprüft wird und indem, nach Auffinden der wenigstens einen ersten Frequenz des wenigstens einen Einweg-DVB-Rundfunkkanals, ein erster Satz von Daten, wie er auf der ersten Frequenz gesendet wird, und der Satz wenigstens eine Adresse eines Server(3) und eine Liste von möglichen zweiten Frequenzen enthält, wobei die möglichen zweiten Frequenzen die beim Aufbau einer Zweiwege-DOCSIS-Kommunikationssitzung zwischen dem Teilnehmer-Endgerät (5) und dem Server (3) zu verwenden sind, empfangen wird,
b. die Liste von möglichen zweiten Frequenzen von dem Teilnehmer-Endgerät verwendet wird, um die Zweiwege-DOCSIS-Kommunikationssitzung zwischen dem Teilnehmer-Endgerät und dem Server bei einer der zweiten Frequenzen aufzubauen.

16. Verfahren nach Anspruch 15, bei dem von dem Teilnehmer-Endgerät (5) während der Zweiwege-DOCSIS-Kommunikationssitzung Konfigurationsdaten von dem Server (3) heruntergeladen und die Konfigurationsdaten verarbeitet werden, um das Teilnehmer-Endgerät (5) zu installieren.

17. Verfahren nach Anspruch 14 oder 15, bei dem durch das Teilnehmer-Endgerät (5) über den wenigstens einen Einweg-Rundfunkkanal mit einer zweiten Häufigkeit eine an das Teilnehmer-Endgerät (5) gerichtete Berechtigungsmanagementnachricht (EMM) empfangen wird und die Berechtigungsmanagementnachricht (EMM) dazu verwendet wird, um von dem Server einen oder mehrere vorgegebene Schlüssel zu erhalten, wobei die Schlüssel es erlauben, Medieninhalte nach Maßgabe von Abonnementsdetails zu entschlüsseln.

18. Teilnehmer-Endgerät, das dazu eingerichtet ist, um das Verfahren von Anspruch 15, 16 oder 17 durchzuführen.

19. Verfahren zum Aufbau einer Zweiwege-Kommunikationssitzung in einem Server (3), bei dem:
a. über wenigstens einen Einweg-DVB-Rundfunkkanal auf wenigstens einer ersten Frequenz ein erster Satz von Daten mit einer ersten Häufigkeit periodisch ausgesendet wird, der wenigstens eine Adresse des Servers (3) und eine Liste von möglichen zweiten Frequenzen enthält, die beim Aufbau einer Zweiwege-DOCSIS-Kommunikationssitzung zwischen einem Teilnehmer-Endgerät (5) und dem Server (3) zu verwenden sind,
b. die Zweiwege-DOCSIS-Kommunikationssitzung mit dem Teilnehmer-Endgerät bei einer der zweiten Frequenzen aufgebaut wird.

20. Verfahren nach Anspruch 19, bei dem:
• Konfigurationsdaten für das Teilnehmer-Endgerät (5) in einem ersten Server (3) gespeichert werden,
• während der Zweiwege-Kommunikationssitzung dem Teilnehmer-Endgerät (5) erlaubt wird, die Konfigurationsdaten von dem Server (3) herunterzuladen.

21. Verfahren nach Anspruch 19 oder 20, bei dem über den wenigstens einen Einweg-Kanal eine Berechtigungsmanagementnachricht (EMM) mit einer zweiten Häufigkeit periodisch ausgesendet wird und an das Teilnehmer-Endgerät (5) gerichtet wird, wobei die Berechtigungsmanagementnachricht wenigstens Daten enthält, die von dem Teilnehmer-Endgerät (5) zu verwenden sind, um einen oder mehrere vorgegebene Schlüssel von dem ersten Server zu erhalten, wobei die Schlüssel es ermöglichen, nach Maßgabe von Abonnementsdetails Medieninhalte zu entschlüsseln.

22. Server, der dazu eingerichtet ist, um das Verfahren wie in Ansprüchen 19, 20 oder 21 beansprucht, durchzuführen.

## Revendications

1. Procédé de mise en place d'une session de communication bidirectionnelle entre un équipement de local client CPE (5) et un premier serveur (3), comprenant:
a) diffuser périodiquement, par le biais dudit premier serveur (3), à un premier débit, via au moins un canal de diffusion DVB unidirectionnel, à au moins une première fréquence, un premier ensemble de données incluant au moins une adresse dudit premier serveur (3) et une liste de deuxièmes fréquences possibles à utiliser pour établir un canal de communication DOCSIS bidirectionnel entre ledit équipement de local client (5) et ledit serveur (3) pour ladite session de communication bidirectionnelle,
b) lors de la mise sous tension dudit équipement de local client (5), régler par le biais dudit équipement de local client ledit au moins un canal de diffusion DVB unidirectionnel sur ladite au moins une première fréquence par recherche d'un identifiant de fournisseur de média spécifique dans tous les flux pouvant être reçus par le CPE, vérifier la présence d'un identifiant de fournisseur de média spécifique, et après avoir trouvé ladite au moins une première fréquence dudit au moins un canal de diffusion DVB unidirectionnel, recevoir dudit au moins un canal DVB unidirectionnel ledit premier ensemble de données diffusé à ladite au moins une première fréquence,
c) utiliser, par le biais dudit équipement de local client, ladite liste de deuxièmes fréquences possibles pour établir ladite session de communication DOCSIS bidirectionnelle entre ledit équipement de local client et ledit serveur à l'une desdites deuxièmes fréquences.

2. Procédé d'installation automatique d'un équipement de local client (5), comprenant :
• stocker des données de configuration destinées audit équipement de local client (5) dans un premier serveur (3),
• utiliser le procédé de la revendication 1 pour établir une session de communication DOCSIS bidirectionnelle entre ledit équipement de local client (5) et ledit premier serveur (3),
• télécharger, par le biais dudit équipement de local client (5), lors de ladite session de communication, lesdites données de configuration dudit premier serveur (3) et traiter lesdites données de configuration pour installer ledit équipement de local client (5).

3. Procédé selon la revendication 2, dans lequel ledit premier ensemble de données comprend des données sur la manière d'authentifier ledit équipement de local client avec ledit premier serveur (3), lesdites données sur la manière d'authentifier ledit équipement de local client (5) avec ledit premier serveur (3) comprennent une adresse d'un serveur d'authentification (Auth) à l'intérieur dudit premier serveur, ledit procédé comprenant l'étape d'utilisation, par ledit équipement de local client (5), au cours de ladite session de communication, ladite adresse dudit serveur d'authentification pour effectuer une action d'authentification.

4. Procédé selon la revendication 1, 2 ou 3, dans lequel ladite liste de deuxièmes fréquences possibles comprend des fréquences DOCSIS (Data Over Cable Service Spécification).

5. Procédé selon l'une quelconque des revendications précédentes, comprenant :
• diffuser périodiquement, par le biais dudit premier serveur (3), via ledit au moins un canal unidirectionnel, à un deuxième débit, un message de gestion de droits d'accès (EMM) et adressé audit équipement de local client (5), ledit message de gestion de droits d'accès comprenant au moins des données destinées à être utilisées par ledit équipement de local client (5) pour obtenir au moins une clé prédéterminée dudit premier serveur, lesdites clés permettant de décrypter un contenu multimédia en fonction de détails d'abonnement.

6. Procédé selon la revendication 5, dans lequel ledit message de gestion de droits d'accès comprend une adresse d'un serveur d'accès conditionnel (CAS) dans ledit premier serveur où ladite au moins une clé peut être obtenue par ledit équipement de local client.

7. Procédé selon la revendication 6, dans lequel ledit procédé comprend l'utilisation de ladite adresse dudit serveur d'accès conditionnel (CAS) par l'équipement de local client (5) pour acquérir ladite au moins une clé.

8. Procédé selon l'une des revendications 5 à 7, dans lequel ledit deuxième débit auquel ledit premier serveur transmet périodiquement ledit message de gestion de droits d'accès (EMM) adressé audit équipement de local client (5) est égal à un profil rapide pendant une première durée suivi par un profil lent pendant une deuxième durée.

9. Procédé selon l'une des revendications précédentes, dans lequel ledit équipement de local client stocke une liste de premières fréquences possibles pour ledit au moins un canal de diffusion DVB unidirectionnel, ladite recherche faite par ledit équipement de local client pour ledit premier ensemble de données tel que diffusé à ladite première fréquence comprend l'essai de fréquences de ladite liste de premières fréquences possibles par ordre de probabilité décroissante.

10. Procédé selon l'une quelconque des revendications précédentes, dans lequel ladite utilisation de ladite liste de deuxièmes fréquences possibles pour établir ladite session de communication DOCSIS bidirectionnelle entre ledit équipement de local client et ledit serveur comprend l'essai de fréquences de ladite liste de deuxièmes fréquences possibles dans l'ordre de probabilité décroissante.

11. Procédé selon la revendication 2, dans lequel ledit procédé comprend le stockage d'une liste de numéros de série d'une pluralité d'équipements de local client et d'un identifiant de table d'informations de réseau et d'emplacement pour chaque équipement de local client dans un deuxième serveur (1), ledit identifiant de table d'informations de réseau et d'emplacement concernant un emplacement où l'installation d'un équipement de local client associé sera effectuée, et la transmission dudit identifiant de table d'informations de réseau audit premier serveur (3).

12. Procédé selon la revendication 11, dans lequel le procédé comprend l'utilisation, par ledit équipement de local client, de ladite session de communication bidirectionnelle pour s'inscrire auprès dudit premier serveur (3), et l'obtention de données domestiques auprès dudit premier serveur (3), incluant au moins ledit identifiant de table d'informations de réseau et d'emplacement.

13. Système comprenant au moins un équipement de local client et un premier serveur pour mettre en œuvre le procédé selon l'une quelconque des revendications 1 à 12.

14. Système selon la revendication 13, comprenant un deuxième serveur et adapté pour mettre en œuvre le procédé selon l'une quelconque des revendications 11 ou 12.

15. Procédé de mise en place d'une session de communication bidirectionnelle dans un équipement de local client (5), comprenant:
a. lors de la mise sous tension dudit équipement de local client (5), régler par l'équipement de local client un canal de diffusion DVB unidirectionnel sur une première fréquence par recherche d'un identifiant de fournisseur de média spécifique dans tous les flux pouvant être reçus par le CPE, vérifier la présence d'un identifiant de fournisseur de média spécifique, et après avoir trouvé ladite au moins une première fréquence dudit au moins un canal de diffusion DVB unidirectionnel, et recevoir un premier ensemble de données tel que diffusé sur ladite une première fréquence, le premier ensemble de données incluant au moins une adresse d'un serveur (3) et une liste de deuxièmes fréquences possibles à utiliser pour établir un canal de communication DOCSIS bidirectionnel entre ledit équipement de local client (5) et ledit serveur (3),
b. utiliser, par le biais dudit équipement de local client, ladite liste de deuxièmes fréquences possibles pour établir ladite session de communication DOCSIS bidirectionnelle entre ledit équipement de local client et ledit serveur à l'une desdites deuxièmes fréquences.

16. Procédé selon la revendication 15, le procédé comprenant le téléchargement, par le dudit équipement de local client (5), lors de ladite session de communication DOCSIS bidirectionnelle, de données de configuration depuis ledit serveur (3) et le traitement desdites données de configuration pour installer ledit équipement de local client (5).

17. Procédé selon la revendication 14 ou 15, comprenant la réception, par ledit équipement de local client (5), via ledit au moins un canal de diffusion unidirectionnel, à un deuxième débit, d'un message de gestion de droit d'accès (EMM) adressé audit équipement de local client (5), et l'utilisation dudit message de gestion de droits d'accès (EMM) pour obtenir au moins une clé prédéterminée depuis ledit serveur, lesdites clés permettant de décrypter un contenu multimédia en fonction de détails d'abonnement.

18. Équipement de local client conçu pour mettre en œuvre le procédé de la revendication 15, 16 ou 17.

19. Procédé d'établissement d'une session de communication bidirectionnelle dans un serveur (3), comprenant :
a. diffuser périodiquement à un premier débit, via au moins un canal de diffusion DVB unidirectionnel, sur au moins une première fréquence, un premier ensemble de données comprenant au moins une adresse dudit serveur (3) et une liste de deuxièmes fréquences possibles destinées à être utilisées pour mettre en place une session de communication DOCSIS bidirectionnelle entre un équipement de local client (5) et ledit serveur (3),
b. mettre en place une session de communication DOCSIS bidirectionnelle avec l'équipement de local client à l'une desdites deuxièmes fréquences.

20. Procédé selon la revendication 19, comprenant:
• stocker des données de configuration pour ledit équipement de local client (5) dans un premier serveur (3),
• permettre audit équipement de local client (5), au cours de ladite session de communication bidirectionnelle, de télécharger lesdites données de configuration depuis ledit serveur (3).

21. Procédé selon la revendication 19 ou 20, comprenant la diffusion périodique, via au moins un canal unidirectionnel, à un deuxième débit, d'un message de gestion de droits d'accès (EMM) et adressé audit équipement de local client (5), ledit message de gestion de droits d'accès comprenant au moins des données destinées à être utilisées par ledit équipement de local client (5) pour obtenir une ou plusieurs clés prédéterminées auprès depuis ledit premier serveur, lesdites clés permettant de déchiffrer un contenu multimédia en fonction de détails d'abonnement.

22. Serveur adapté pour mettre en œuvre le procédé selon les revendications 19, 20 ou 21.
